(19) Europäisches Patentamt
European Patent Office
Office européen des brevets

(11) Veröffentlichungsnummer: **0 226 545**
**B1**

# (12) EUROPÄISCHE PATENTSCHRIFT

(45) Veröffentlichungstag der Patentschrift: **19.04.89**

(51) Int. Cl.⁴: **C 07 F 9/38**, C 07 F 9/40, C 08 K 5/53

(21) Anmeldenummer: **86810581.8**

(22) Anmeldetag: **10.12.86**

## (54) Substituierte Aminoxyethylphosphonate.

(30) Priorität: **16.12.85 US 809648**

(43) Veröffentlichungstag der Anmeldung: **24.06.87 Patentblatt 87/26**

(45) Bekanntmachung des Hinweises auf die Patenterteilung: **19.04.89 Patentblatt 89/16**

(84) Benannte Vertragsstaaten: **BE CH DE FR GB IT LI NL SE**

(56) Entgegenhaltungen:
**DE-A-2 640 011**
**US-A-3 432 578**

**CHEMICAL ABSTRACTS, Band 105, Nr. 25, 22. Dezember 1986, page 813, Zusammenfassung Nr. 226809u, Columbus, Ohio, US; A.R. KHOMUTOV et al.: "Synthesis of some (aminooxy)phosphonic acids and their esters", & IZV. AKAD. NAUK. SSSR. SER. KHIM. 1986, (5), 1202-4**

(73) Patentinhaber: **CIBA- GEIGY AG, Klybeckstrasse 141, CH- 4002 Basel (CH)**

(72) Erfinder: **Ravichandran, Ramanathan, 111 De Haven Drive Apt. 125, Yonkers, N.Y. 10703 (US)**

EP 0 226 545 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft neue Aminoxyethylphosphonate, deren Verwendung zum Stabilisieren von organischem Material und das mit deren Hilfe gegen oxidativen, thermischen und/oder aktinischen Abbau stabilisierte organische Material.

Organische Materialien, wie z. B. Kunststoffe und Harze unterliegen thermischem, oxidativem und lichtinduziertem Abbau. In der Technik ist eine grosse Anzahl von Stabilisatoren für eine Vielzahl von Substraten bekannt. Die Wirksamkeit eines Stabilisators hängt unter anderem von der Art des Substrats, in welchem er eingesetzt wird, und vom jeweiligen Abbaumechanismus ab. Daher ist es im allgemeinen schwierig, für eine konkrete Anwendung den wirksamsten und ökonomischsten Stabilisator anzugeben.

So kann beispielsweise die Wirksamkeit eines Stabilisators, der die Flüchtigkeit einer Verbindung reduziert, darauf zurückgeführt werden, dass er einen Bindungsbruch der Substratmoleküle verhindert. Um eine geringe Versprödung oder die Erhaltung der Elastizität eines Polymeren oder eines Elastomeren zu gewährleisten, kann von einem Stabilisator verlangt werden, dass er übermässige Vernetzungsreaktionen und/oder Kettenabbruch verhindert. Um die Vergilbung zu unterbinden, müssen Reaktionen, die zu neuen Chromophoren führen, verhindert werden. Weiterhin müssen Probleme der Verarbeitungsstabilität und der Substratverträglichkeit beachtet werden.

Verschiedene organische Hydroxylamine sind bekannt und einige sind im Handel erhältlich. Eine Anzahl von Patenten offenbaren substituierte Hydroxylamine als Antioxidantien für verschiedene Substrate, einschliesslich Polyolefine, Polyester und Polyurethane. Als repräsentative Patente seien die US-Patente 3 432 578, 3 644 278, 3 778 464, 3 408 422, 3 926 909, 4 316 996 und 4 386 224 genannt, welche im wesentlichen N,N-Dialkyl-, N,N-Diaryl- und N,N-Diaralkylhydroxylamine und deren Wirksamkeit als Farbverbesserer beschreiben.

Es wurde nun gefunden, dass die Aminoxyethylphosphonate dieser Erfindung eine Vielzahl der gewünschten Eigenschaften besitzen, wodurch diese Verbindungen zu besonders effektiven Stabilisatoren werden. So schützen sie eine Reihe von Substraten, wie z. B. Polyolefine, Elastomere und Schmiermittel gegen oxidativen und thermischen Abbau. Ferner sind sie sehr wirkungsvolle Farbverbesserer und Verarbeitungsstabilisatoren für Polyolefinzusammensetzungen, die Metallsalze von Fettsäuren und phenolische Antioxidantien enthalten können. Hauptsächlich können die erfindungsgemässen Aminoxyethylphosphonate dazu dienen, Verfärbungen zu vermindern, die auf die Gegenwart von phenolischen Antioxidantien und/oder auf die Verarbeitungsbedingungen zurückzuführen sind. Ferner schützen die erfindungsgemässen Verbindungen das organische Polymer direkt vor den Auswirkungen der Verarbeitungsbedingungen. Sie schützen auch solche Polyolefinzusammensetzungen, die gehinderte Amin-Lichtstabilisatoren oder Kombinationen von phenolischen Antioxidantien und Phosphiten enthalten, vor der Verfärbung. Ferner werden Verfärbungen, die auf die Einwirkung von Zerfallsprodukten natürlicher Gase zurückzuführen sind, merklich vermindert.

Die vorliegende Erfindung betrifft Verbindungen der Formel I,

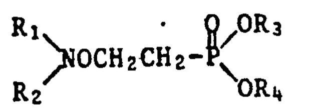

(I)

worin $R_1$, $R_2$, $R_3$ und $R_4$ unabhängig voneinander Wasserstoff, $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeuten; und deren Alkalimetall- und Erdalkalimetallsalze.

$R_1$, $R_2$, $R_3$ und $R_4$ bedeuten als $C_1$-$C_{36}$-Alkyl zum Beispiel Methyl, Ethyl, n-Propyl, n-Butyl, tert.-Butyl, n-Pentyl, n-Octyl, 2-Ethylhexyl, Decyl oder Dodecyl. $C_1$-$C_{12}$-Alkyl, welches geradkettig oder verzweigt sein kann, ist bevorzugt.

$R_1$, $R_2$, $R_3$ und $R_4$ sind als $C_5$-$C_{12}$-Cycloalkyl beispielsweise Cyclopentyl, Cyclohexyl oder Cyclooctyl. Bevorzugt ist Cycloalkyl mit 5 bis 7 Kohlenstoffatomen, insbesondere Cyclopentyl und Cyclohexyl.

$R_1$, $R_2$, $R_3$ und $R_4$ können als unsubstituiertes oder durch $C_1$-$C_{36}$-Alkyl substituiertes $C_7$-$C_9$-Aralkyl insbesondere Phenylalkyl mit 7 bis 9 Kohlenstoffatomen bedeuten, wobei der Phenylring gegebenenfalls durch $C_1$-$C_{36}$-Alkyl, bevorzugt Methyl, substituiert sein kann. Beispiele sind Benzyl, α-Methylbenzyl, α,α-Dimethylbenzyl, 3,5-Dimethylbenzyl und p-Nonylbenzyl.

Typische Salze der Verbindung der Formel 1 sind beispielsweise die Natrium-, Kalium-, Kalzium- und Magnesiumsalze.

Bevorzugt sind Verbindungen der Formel I, worin $R_1$, $R_2$, $R_3$ und $R_4$ unabhängig voneinander $C_1$-$C_{12}$-Alkyl, Cyclopentyl, Cyclohexyl, Benzyl, α-Methylbenzyl oder α,α-Dimethylbenzyl sind.

Besonders bevorzugt sind Verbindungen der Formel I, worin $R_1$ und $R_2$ Benzyl sind und $R_3$ und $R_4$ $C_1$-$C_8$-Alkyl bedeuten.

Als bevorzugte Beispiele der Verbindung der Formel I seien genannt:
Dimethyl-(N,N-dibenzylaminoxy)ethylphosphonat und
Diethyl-(N,N-dibenzylaminoxy)ethylphosphonat.

Die Verbindungen der Formel I können in Analogie zu bekannten Verfahren hergestellt werden, beispielsweise durch Umsetzung eines Hydroxylamins der Formel II,

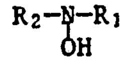 (II)

worin $R_1$ und $R_2$ die oben angegebenen Bedeutungen besitzen, mit einem Vinylphosphonat der Formel III,

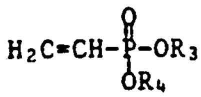 (III)

worin $R_3$ und $R_4$ die oben angegebenen Bedeutungen haben, in einem geeigneten Lösungsmittel.

Als Lösungsmittel seien genannt: Aromatische Kohlenwasserstoffe wie beispielsweise Benzol, Toluol, Xylol und dergleichen, oder heterocyclische Ether wie beispielsweise Tetrahydrofuran. Die Reaktionstemperatur liegt zweckmässigerweise bei 0 bis 70°C. Bevorzugt erfolgt die oben beschriebene Umsetzung in Gegenwart eines Protonenakzeptors wie beispielsweise einem tertiären Amin, insbesondere Triethylamin oder Pyridin, oder einem Alkalihydroxid oder einem Alkalialkoxid.

Die Ausgangsverbindungen der Formeln II und III sind bekannt, teilweise im Handel erhältlich und können in Analogie zu bekannten Verfahren hergestellt werden.

Die Salze der Formel I können ebenfalls in Analogie zu bekannten Verfahren hergestellt werden.

Die erfindungsgemässen Verbindungen eignen sich als Stabilisatoren für eine Reihe von organischen Materialien, wie beispielsweise

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z. B. von Cyclopenten oder Norbornen.

2. Mischungen der unter 1) genannten Polymeren, z. B. Mischungen von Polypropylen mit Polyisobutylen.

3. Copolymere von Mono- und Diolefinen untereinander oder mit anderen Vinylmonomeren, wie z. B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z. B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z. B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z. B. als sogenannte ABS-, MBS-, ASA- oder AES-Polymere bekannt sind.

7. Halogenhaltige Polymere, wie z. B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z. B. Ethylenoxid, enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylen-terephthalamid, Poly-m-phenylenisophthalamid, sowie deren Block-Copolymere mit Polyethern, wie z. B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexan-terephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z. B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z. B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren, wie z. B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Öle und Wachse, oder Öle, Wachse und Fette auf Basis synthetischer Ester (z. B. Phthalate, Adipate, Phosphate oder Trimellithate), sowie Abmischungen synthetischer Ester mit Mineralölen in beliebigen Gewichtsverhältnissen, wie sie z. B. als Spinnpräparationen Anwendung finden, sowie deren wässrige Emulsionen.

29. Wässrige Emulsionen natürlicher oder synthetischer Kautschuke, wie z. B. Naturkautschuk-Latex oder Latices von carboxylierten Styrol-Butadien-Copolymeren.

Bevorzugt werden die Verbindungen der Formel I und deren Salze in synthetischen Polymeren, insbesondere Polyolefin-Homopolymeren oder -Copolymeren, eingesetzt.

Besonders bevorzugt werden die erfindungsgemässen Verbindungen in Polyolefinen, wie beispielsweise Polyethylen und Polypropylen, Polystyrol, einschliesslich schlagfestem Polystyrol, Acrylnitril-Butadien-Styrol-Harz (ABS), Styrol-Butadien-Kautschuk (SBR), Isopren als auch natürlichem Kautschuk, Polyester, einschliesslich Polyethylenterephthalat und Polybutadienterephthalat sowie deren Copolymeren, und in Schmierölen, die beispielsweise aus Mineralölen hergestellt werden, eingesetzt.

Im allgemeinen können die erfindungsgemässen Verbindungen in Konzentrationen von ~0,01 bis ~5 Gew.-%, bezogen auf die stabilisierte Zusammensetzung, eingesetzt werden; allerdings kann je nach Verwendung und Substrat die Stabilisatormenge variieren. Bevorzugt verwendet man ~0,5 bis 2 Gew.-%, insbesondere 0,1 bis 1 Gew.-%.

Die Einarbeitung der erfindungsgemässen Stabilisatoren in das organische Material kann nach bekannten Methoden während jeder Verarbeitungsstufe vor oder während der Formgebung erfolgen. Der Stabilisator kann beispielsweise der Schmelze zugegeben oder auch in Pulverform dem organischen Material zugemischt werden oder eine Emulsion bzw. Suspension des Stabilisators kann mit einer Lösung, Suspension oder Emulsion des organischen Materials vermischt werden.

Die stabilisierten Zusammensetzungen dieser Erfindung können gegebenenfalls auch herkömmliche Additive in Konzentrationen von beispielsweise ~0,05 bis ~5 Gew.-%, bevorzugt ~0,1 bis 2,5 Gew.-%, bezogen auf das stabilisierte Material, enthalten.

**Beispiele für herkömmliche Additive sind:**

1. Antioxidantien

1.1. Alkylierte Monophenole, z. B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol.

1.2. Alkylierte Hydrochinone, z. B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z. B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z. B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Di-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Di-(3-tert.butyl-4-hydroxy-5-methylphenyl)-dicyclopentadien, Di-[2-(3'-tert.butyl-2'-hydroxy-5'-methyl-benzyl)-6-tert.butyl-4-methyl-phenyl]-terephthalat.

1.5 Benzylverbindungen, z. B. 1,3,5-Tri-(3,5-di-tert.butyl-4-hydroxybenzyl)-2,4,6-trimethylbenzol, Di-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)-dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, 3,5-Di-tert.butyl-4-hydroxybenzyl-phosphonsäure-monoethylester, Calcium-salz.

1.6. Acylaminophenole, z. B. 4-Hydroxy-laurinsäureanilid, 4-Hydroxystearinsäureanilid, 2,4-Bis-octylmercapto-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z. B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat, Di-hydroxyethyl-oxalsäurediamid.

1.8. Ester der β-(5-tert.Butyl-4-hydroxy-3-methylphenyl)-propionsäure mit ein- oder mehrwertigen Alkoholen, wie z. B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyl-oxyalsäurediamid.

1.9. Amide der β-(3,5-Di-tert.butyl-4-hydroxyphenyl)-propionsäure, wie z. B. N,N'-Di-(3,5-di-tert.butyl-4-hydroxyphenylpropionyl)-hexamethylendiamin, N,N'-Di-(3,5-di-tert.butyl-4-hydroxyphenylpropionyl)-trimethylendiamin, N,N'-Di-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z. B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z. B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z. B. 4-tert.Butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäure-hexadecylester.

2.4. Acrylate, wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z. B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyl-dithiocarbamat, Nickelsalze von 4-Hydroxy-3,5-di-tert.butylbenzyl-phosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z. B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

2.7. Oxalsäurediamide, wie z. B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-disubstituierten Oxaniliden.

3. Metalldesaktivatoren, wie z. B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z. B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5.5]undecan.

5. Peroxidzerstörende Verbindungen, wie z. B. Ester der β-Thiodipropionsäure, beispielsweise der Lauryl-, Stearyl-, Myristyl- oder Tridecylester, Mercaptobenzimidazol, das Zinksalz des 2-Mercaptobenzimidazols, Zinkdibutyl-dithiocarbamat, Dioctadecyldisulfid, Pentaerythrit-tetrakis-(β-dodecylmercapto)-propionat.

6. Polyamidstabilisatoren, wie z. B. Kupfersalze in Kombination mit Jodiden und/oder Phosphorverbindungen und Salze des zweiwertigen Mangans.

7. Basische Co-Stabilisatoren, wie z. B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z. B. 4-tert.Butylbenzoesäure, Adipinsäure, Diphenylessigsäure.

9. Füllstoffe und Verstärkungsmittel, wie z. B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z. B. Weichmacher, Gleitmittel, Emulgatoren, Pigmente, Optische Aufheller, Flammschutzmittel, Antistatika, Treibmittel.

Die Verbindungen der Formel 1 und deren Salze eignen sich sowohl allein als auch in Kombination mit anderen Additiven als Stabilisatoren für eine Reihe von Substraten, insbesondere Polyolefinen, die gegebenenfalls Alkalimetall-, Erdalkalimetall- und Aluminiumsalze von höheren Fettsäuren (Beispiele sind die oben unter Punkt 7 aufgeführten Additive) und/oder gehinderte phenolische Antioxidantien enthalten können. Die erfindungsgemässen Phosphonate vermindern sehr wirksam Verfärbungen, die auf die Anwesenheit von Phenolen zurückzuführen sind. Solche phenolischen Antioxidantien sind beispielsweise: n-Octadecyl-3,5-di-tert-butyl-4-hydroxyhydrocinnamat, Neopentantetrayl-tetrakis(3,5-di-tert-butyl-4-hydroxy-hydrocinnamat), Di-n-octadecyl-3,5-di-tert-butyl-4-hydroxybenzyl-phosphonat, 1,3,5-Tris(3,5-di-tert-butyl-4-hydroxybenzyl)-isocyanurat, Thiodiethylen-bis(3,5-di-tert-butyl-4-hydroxyhydrocinnamat), 1,3,5-Trimethyl-2,4,6-tris(3,5- di-tert-butyl-4-hydroxybenzyl)-benzol, 3,6-Di-oxaoctamethylen-bis(3-methyl-5-tert-butyl-4-hydroxyhydrocinnamat), 2,6-Di-tert-butyl-p-cresol, 2,2'-Ethyliden-bis(4,6-di-tert-butylphenol), 1,3,5-Tris(2,6-di-methyl-4-tert-butyl-3-hydroxybenzyl)isocyanurat, 1,1,3-Tris(2-methyl-4-hydroxy-5-tert-butylphenyl)butan, 1,3,5-Tris[2-(3,5-di-tert-butyl-4-hydroxy-hydrocinnamoyloxy)ethyl]isocyanurat, 3,5-Bis(3,5-di-tert-butyl-4-hydroxybenzyl)mesitol, Hexamethylen-bis(3,5-di-tert-butyl-4-hydroxyhydrocinnamat), 1-(3,5-Di-tert-butyl-4-hydroxyanilino)-3,5-bis(octylthio)-s-triazine, N,N'-Hexamethylen-bis(3,5-di-tert-butyl-4-hydroxy-hydrocinnamamid), Kalzium-bis(ethyl-3,5-di-tert-butyl-4-hydroxybenzyl-phosphonat), Ethylen-bis[3,3-bis(3-tert-butyl-4-hydroxyphenyl)butyrat], Octyl-3,5-di-tert-butyl-4-hydroxybenzyl-mercaptoacetat, Bis(3,5-di-tert-butyl-4-hydroxy-hydrocinnamoyl)hydrazid, und N,N'-Bis[2-(3,5-di-tert-butyl-4-hydroxy-hydrocinnamoyloxy)ethyl]oxamid, insbesondere Neopentantetrayl-tetrakis(3,5-di-tert-butyl-4-hydroxy-hydrocinnamat), n-Octadecyl-3,5-di-tert-butyl-4-hydroxy-hydrocinnamat), 1,3,5-Trimethyl-2,4,6-tris(3,5-di-tert-butyl-4-hydroxybenzyl)benzol, 1,3,5-Tris(3,5-di-tert-butyl-4-hydroxybenzyl)isocyanurat, 2,6-di-tert-butyl-p-cresol oder 2,2'-Ethyliden-bis(4,6-di-tert-butylphenol).

Die Verbindungen der Formel 1 und deren Salze verhindern auch Verfärbungen, die auf die Anwesenheit von gehinderten Amin-Lichtstabilisatoren zurückzuführen sind, wie beispielsweise:

Bis(1,2,2,6,6-pentamethyl-4-piperidyl)-2-n-butyl-2-(3,5-di-tert-butyl-4-hydroxybenzyl)malonat, Bis(2,2,6,6-tetramethyl-4-piperidyl)-sebacat, Umsetzungsprodukt von Dimethylsuccinat mit 1-Hydroxyethyl-2,2,6,6-tetramethyl-4-hydroxypiperidin, und Umsetzungsprodukt von 2,4-Dichloro-6-octylamino-s-triazin mit N,N'-(2,2,6,6-Tetramethyl-4-piperidyl)hexamethylendiamin.

Die folgenden Beispiele erläutern die Erfindung weiter. Alle Mengenangaben beziehen sich auf das Gewicht, soweit nicht anders angegeben.

**Beispiel 1:** Herstellung von Dimethyl-(N,N-dibenzylaminoxy)ethylphosphonat

Eine Lösung von 12,54 g Dibenzylhydroxylamin in 75 ml trockenem Tetrahydrofuran wird mit 0,7 g Kalium-tert-butoxid gemischt. Anschliessend werden 8,0 g Dimethylvinylphosphonat hinzugegeben. Das Reaktionsgemisch wird 12 Stunden bei Raumtemperatur gerührt und dann bei vermindertem Druck konzentriert. Die wässrige Phase wird abgetrennt. Die organische Phase wird mit Wasser und einer Salzlösung

gewaschen, über $MgSO_4$ getrocknet und bei vermindertem Druck eingeengt. Nach chromatographischer Reinigung (Flüssigkeitschromatographie) erhält man das Produkt als blass-gelbes Öl.

Elementaranalyse:

| | |
|---|---|
| Berechnet für $C_{18}H_{24}NO_4P$: | C 61,9; H 6,9; N 4,0 |
| Gefunden: | C 61,2; H 6,8; N 3,9 |

**Beispiel 2:** Herstellung von Diethyl-(N,N-dibenzylaminoxy)ethylphosphonat

Die Herstellung erfolgt in Analogie zu Beispiel 1. Es werden 13,0 g Dibenzylhydroxylamin, 0,68 g Kalium-tert-butoxid und 10,0 g Diethylvinylphosphonat in 100 ml Tetrahydrofuran eingesetzt. Man erhält das Produkt als blass-gelbe Flüssigkeit.

Elementäranalyse:

| | |
|---|---|
| Berechnet für $C_{20}H_{28}NO_4P$: | C 63,7; H 7,5; N 3,7 |
| Gefunden: | C 63,3; H 7,5; N 3,8 |

**Beispiel 3:** Verarbeitungsstabilität von Polypropylen

Die Grundformulierung enthält 100 Teile unstabilisiertes Polypropylen (®Profax 6501, Himont) und 0,1 Teil Kalziumstearat. Die unten angegebenen Stabilisatoren werden in Form einer Lösung dem Polypropylen zugemischt (Lösungsmittel: Methylenchlorid). Das Lösungsmittel wird im Vakuum entfernt. Die stabilisierte Harz-Formulierung wird bei 100 Umdrehungen pro Minute extrudiert.

Extrusionsbedingungen:

| | |
|---|---|
| Zylinder 1 | 232° C |
| Zylinder 2 | 246° C |
| Zylinder 3 | 260° C |
| Düse 1 | 260° C |
| Düse 2 | 260° C |
| Düse 3 | 260° C |

Nach der ersten, dritten und fünften Extrusion werden die Harz-Kügelchen unter Druck bei 193°C zu 3,2 mm dicken Folien verformt.

Der "Yellowness Index" der Proben wird gemäss ASTM D 1925-63 T bestimmt. Niedrige Werte bedeuten eine geringe Verfärbung. Die Ergebnisse sind in den Tabellen Ia und IIa wiedergegeben.

Der Schmelzindex der Proben wird gemäss ASTM 1238-L bestimmt. Höhere Werte bedeuten eine geringere Molmasse und sind ein Hinweis dafür, dass das Polymer abgebaut ist. Die Ergebnisse sind in den Tabellen Ib und IIb aufgeführt.

**Tabelle Ia:**

| Stabilisator | "Yellowness Index" nach der 1. Extrusion | 3. Extrusion | 5. Extrusion |
|---|---|---|---|
| ohne | 1,8 | 2,5 | 3,5 |
| 0,1 % Antioxidans A | 4,6 | 8,9 | 10,9 |
| 0,1 % Antioxidans A plus 0,05 % Beispiel 1 | 1,4 | 1,9 | 2,4 |

**Tabelle Ib:**

| Stabilisator | "Schmelzindex" in g/10 min nach der 1. Extrusion | 5. Extrusion |
|---|---|---|
| ohne | 5,0 | 9,9 |
| 0,1 % Antioxidans A | 2,8 | 4,8 |
| 0,1 % Antioxidans A plus 0,05 % Beispiel 1 | 2,6 | 3,8 |

Antioxidans A:
Neopentantetrayl-tetrakis[3,5-di-tert-butyl-4-hydroxyhydrocinnamat]

**Tabelle IIa:**

| Stabilisator | "Yellowness Index" nach der 1. Extrusion | 3. Extrusion | 5. Extrusion |
|---|---|---|---|
| ohne | 3,6 | 3,9 | 4,6 |
| 0,1 % Antioxidans A | 6,1 | 7,9 | 9,4 |
| 0,1 % Antioxidans A plus 0,05 % Beispiel 2 | 2,7 | 3,6 | 3,3 |

**Tabelle IIb:**

| Stabilisator | Schmelzindex in g/10 min nach der 1. Extrusion | 5. Extrusion |
|---|---|---|
| ohne | 4,4 | 11,5 |
| 0,1 % Antioxidans A | 2,5 | 4,2 |
| 0,1 % Antioxidans A plus 0,05 % Beispiel 2 | 2,3 | 3,4 |

Antioxidans A:
Neopentantetrayl-tetrakis[3,5-di-tert-butyl-4-hydroxyhydrocinnamat]

Aus den obigen Tabellen ist zu ersehen, dass die erfindungsgemässen Verbindungen wirkungsvolle Stabilisatoren für Polypropylenzusammensetzungen sind, die phenolische Antioxidantien enthalten.

## Patentansprüche

1. Verbindungen der Formel I,

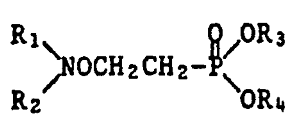

(I)

worin $R_1$, $R_2$, $R_3$ und $R_4$ unabhängig voneinander Wasserstoff, $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeuten, und deren Alkalimetall- und Erdalkalimetallsalze.

2. Verbindungen gemäss Anspruch 1, worin $R_1$, $R_2$, $R_3$ und $R_4$ unabhängig voneinander $C_1$-$C_{12}$-Alkyl, Cyclopentyl, Cyclohexyl, Benzyl, α-Methylbenzyl oder α,α-Dimethylbenzyl sind.

3. Verbindungen gemäss Anspruch 1, worin $R_1$ und $R_2$ Benzyl sind und $R_3$ und $R_4$ $C_1$-$C_8$-Alkyl bedeuten.

4. Dimethyl-(N,N-dibenzylaminoxy)ethylphosphonat gemäss Anspruch 1.

5. Diethyl-(N,N-dibenzylaminoxy)ethylphosphonat gemäss Anspruch 1.

6. Zusammensetzung enthaltend ein gegen oxidativen, thermischen und/oder aktinischen Abbau empfindliches organisches Material und eine für die Stabilisierung ausreichende Menge einer Verbindung gemäss Anspruch 1.

7. Zusammensetzung gemäss Anspruch 6, worin das organische Material ein synthetisches Polymer ist.

8. Zusammensetzung gemäss Anspruch 7, worin das synthetische Polymer ein Polyolefin-Homopolymer oder -Copolymer ist.

9. Zusammensetzung gemäss Anspruch 6, dadurch gekennzeichnet, dass die Zusammensetzung mindestens ein herkömmliches Additiv enthält.

10. Zusammensetzung gemäss Anspruch 9, worin das herkömmliche Additiv ein Metallsalz einer höheren Fettsäure ist.

11. Zusammensetzung gemäss Anspruch 9, worin das herkömmliche Additiv ein phenolisches Antioxidans ist.

12. Zusammensetzung gemäss Anspruch 9, worin die herkömmlichen Additive ein Metallsalz einer höheren Fettsäure und ein phenolisches Antioxidans sind.

13. Zusammensetzung gemäss Anspruch 11, worin das phenolische Antioxidans Neopentantetrayl-tetrakis(3,5-di-tert-butyl-4-hydroxyhydrocinnamat), n-Octadecyl-3,5-di-tert-butyl-4-hydroxyhydrocinnamat, 1,3,5-Trimethyl-2,4,6-tris(3,5-di-tert-butyl-4-hydroxybenzyl)benzol, 1,3,5-tris(3,5-di-tert-butyl-4-hydroxybenzyl)isocyanurat, 2,6-Di-tert-butyl-p-cresol oder 2,2'-Ethyliden-bis(4,6-di-tert-butylphenol) ist.

14. Verwendung von Verbindungen gemäss Anspruch 1 zum Stabilisieren von organischem Material gegen oxidativen, thermischen und/oder aktinischen Abbau.

**Claims**

1. A compound of the formula I

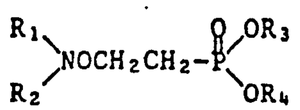

(I)

wherein $R_1$, $R_2$, $R_3$ and $R_4$ independently of one another are hydrogen, $C_1$-$C_{36}$alkyl, $C_5$-$C_{12}$cycloalkyl, $C_7$-$C_9$aralkyl or $C_7$-$C_9$aralkyl which is substituted by $C_1$-$C_{36}$alkyl, and alkali metal salts and alkaline earth metal salts thereof.

2. A compound according to claim 1, wherein $R_1$, $R_2$, $R_3$ and $R_4$ independently of one another are $C_1$-$C_{12}$alkyl, cyclopentyl, cyclohexyl, benzyl, α-methylbenzyl or α,α-dimethylbenzyl.

3. A compound according to claim 1, wherein $R_1$ and $R_2$ are benzyl and $R_3$ and $R_4$ are $C_1$-$C_8$alkyl.

4. Dimethyl (N,N-dibenzylaminoxy)ethylphosphonate according to claim 1.

5. Diethyl (N,N-dibenzylaminoxy)ethylphosphonate according to claim 1.

6. A composition containing an organic material subject to oxidative, thermal and/or actinic degradation and an effective stabilizing amount of a compound according to claim 1.

7. A composition according to claim 6, wherein the organic material is a synthetic polymer.

8. A composition according to claim 7, wherein the synthetic polymer is a polyolefin homopolymer or a polyolefin copolymer.

9. A composition according to claim 6, which contains one or more conventional additives.

10. A composition according to claim 9, wherein the conventional additive is a metal salt of a higher fatty acid.

11. A composition according to claim 9, wherein the conventional additive is a phenolic antioxidant.

12. A composition according to claim 9, wherein the conventional additives are a metal salt of a higher fatty acid and a phenolic antioxidant.

13. A composition according to claim 11, wherein the phenolic antioxidant is neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl) isocyanurate, 2,6-di-tert-butyl-p-cresol or 2,2'-ethylidene-bis(4,6-di-tert-butylphenol).

14. Use of a compound according to claim 1 for stabilizing organic material against oxidative, thermal and/or actinic degradation.

**Revendications**

1. Les composés de formule I ci-dessous:

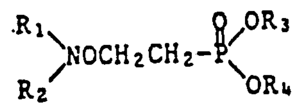

(I)

dans laquelle $R_1$, $R_2$, $R_3$ et $R_4$ désignent chacun, indépendamment les uns des autres, l'hydrogène, un alkyle en $C_1$-$C_{36}$, un cycloalkyle en $C_5$-$C_{12}$, un aralkyle en $C_7$-$C_9$ ou un aralkyle en $C_7$-$C_9$ portant un alkyle en $C_1$-$C_{36}$, ainsi que leurs sels de métaux alcalins et alcalino-terreux.

2. Composés selon la revendication 1 dans lesquels $R_1$, $R_2$, $R_3$ et $R_4$ sont chacun un alkyle en $C_1$-$C_{12}$ ou le groupe cyclopentyle, cyclohexyle, benzyle, α-méthylbenzyle ou α,α-diméthylbenzyle.

3. Composés selon la revendication 1 dans lesquels $R_1$ et $R_2$ sont le groupe benzyle et $R_3$ et $R_4$ un alkyle en $C_1$-$C_8$.

4. Le (N,N-diméthylaminoxy)-éthylphosphonate de diméthyle selon la revendication 1.

5. Le (N,N-diméthylaminoxy)-éthylphosphonate de diéthyle selon la revendication 1.

6. Composition qui comprend une matière organique sensible aux dégradations par oxydation et/ou sous l'action de la chaleur et/ou d'un rayonnement actinique, avec une proportion d'un composé de la revendication 1 suffisante pour protéger cette matière contre les dégradations.

7. Composition selon la revendication 6 dont la matière organique est une matière polymère synthétique.

8. Composition selon la revendication 7 dont le polymère synthétique et un homopolymère ou un copolymère d'oléfines.

9. Composition selon la revendication 6 caractérisée en ce qu'elle contient un ou plusieurs additifs connus.

10. Composition selon la revendication 9 dans laquelle l'additif est un sel de métal d'un acide gras supérieur.

11. Composition selon la revendication 9 dans laquelle l'additif est un anti-oxydant phénolique.

12. Composition selon la revendication 9 dans laquelle les additifs sont un sel de métal d'un acide gras supérieur et un anti-oxydant phénolique.

13. Composition selon la revendication 11 dans laquelle l'anti-oxydant phénolique est le tétrakis-(3,5-di-tert-butyl-4 hydroxy-hydrocinnamate) de néopentanetétrayle, le 3,5-di-tert-butyl-4-hydroxy-hydrocinnamate de n-octadécyle, le 1,3,5-triméthyl-2,4,6-tris-(3,5-di-tert-butyl-4-hydroxybenzyl)-benzène, l'isocyanurate de 1,3,5-tris-(3,5-di-tert-butyl-4-hydroxybenzyle), le 2,6-di-tert-butyl-p-crésol ou le 2,2'-éthylidène-bis-(4,6-di-tert-butylphénol).

14. Utilisation des composés de la revendication 1 pour stabiliser et protéger les matières organiques contre les dégradations par oxydation et/ou sous l'action de la chaleur ou d'un rayonnement actinique.